# EUROPEAN PATENT SPECIFICATION

(11) **EP 3 966 774 B1**
(45) Date of publication and mention of the grant of the patent: **11.03.2026**
(21) Application number: 20801598.2
(22) Date of filing: 05.05.2020
(51) Int. Cl.: G06Q 50/06, G06Q 50/10, G01F 15/07, G01M 3/04, G01M 3/26, G01M 3/38

(54) **SYSTEM AND METHOD FOR OUTDOOR LEAK DETECTION**
SYSTEM UND VERFAHREN ZUR ERKENNUNG VON LECKS IM FREIEN
SYSTÈME ET PROCÉDÉ DE DÉTECTION DE FUITE EXTÉRIEURE

(30) Priority: 06.05.2019 US 201916404152
(43) Date of publication of application: 16.03.2022
(73) Proprietor: Badger Meter, Inc., Milwaukee, WI 53224 (US)
(72) Inventor: JAVEY, Shahram, Los Gatos, CA 95030 (US)
(74) Representative: Patentanwälte Ruff, Wilhelm, Beier, Dauster & Partner mbB
(86) International application number: PCT/US2020/031485
(87) International publication number: WO 2020/227302

(56) References cited:
- KR-A- 20110 032 272
- KR-A- 20170 022 607
- KR-A- 20190 018 293
- KR-B1- 101 656 796
- US-A1- 2012 185 184
- US-A1- 2016 335 875
- US-A1- 2018 224 550
- SHAKMAK BUBAKER H: "Condition Monitoring of Water Leakage Detection in Buried Pipes Using Sensor Fusion Systems", 31 July 2017 (2017-07-31), XP055970954, Retrieved from the Internet <URL:https://irep.ntu.ac.uk/id/eprint/31336/1/Bubaker%20Shakmak%202016.pdf> [retrieved on 20221013]

## Description

### FIELD OF THE INVENTION

This invention relates to system and methods for detecting leaks in outdoor water supply systems. More particularly, the invention is directed to a system and method for improving outdoor leak detection using environmental imagery and utility supply network information. It is known from Shakmak Bubaker H: "Condition Monitoring of Water Leakage Detection in Buried Pipes Using Sensor Fusion Systems", July 31, 2017 (2017-07-31), XP055970954, to provide a computer implemented method implemented on a computer system including non-transient memory storing instructions for identifying leak locations based on environmental imagery. A utility supply usage environment in environmental imagery captured over a period of time is tracked, and changes in the environmental imagery indicative of a leak location are identified. This serves to better identify leak locations.

### BACKGROUND

Water supply networks are designed to provide continuous supply from a water source, through a water pipe or conduit network, to water usage endpoints. However, because of the continuous supply being provided, leaks within the network will continually leak unless the leak is detected and remedied. The continuous leakage has the potential to cause significant loss of water and revenue, may cause damage to property, etc. Indoor leaks have the potential to cause significant property damage but are usually detected by property owners and identified relatively quickly, minimizing the amount of water and revenue that is lost. Outdoor leaks, in contrast, are a major cause of water loss since identifying the location of these leaks within a utility supply network is both costly and time consuming.

A utility supply network is a utility specific system including at least one utility source, a distribution network, and one or more utility usage endpoints. For example, a water utility supply network may include one or more of a drainage basin, a water collection point such as a lake, river, aquifer, etc., a water purification plant, etc. as a water source, a water pipe network for distributing the water, and one or more homes, businesses, fountains, hydrants, etc. receiving the water from the water pipe network as water usage endpoints.

Typically, utilities monitor the utility supply throughout the utility supply network. For example, a utility typically monitors the net amount of a utility supply entering a utility supply network from utility source(s), the utility supply within the supply network, the supply network itself, the utility supply delivered at utility supply endpoints, etc. The utility supply network is monitored to identify, for example, usage, quality, etc. as well as to identify potential issues such as outages, theft, leakage, contamination, etc. However, when identifying some particular issues, such as leaks in the water pipe network, the monitoring information has limited usefulness by itself. Monitoring typically includes monitoring inputs and outputs such that only the amount is detected. In a typical water supply network, a conduit network may include a complicated network including miles of conduit having only a few intra network metering locations. Accordingly, monitoring amounts has limited usefulness for identifying the source of a leak such that it may be remedied.

Outdoor leaks are typically associated with issues in the water supply network but can also occur after water usage endpoints, such as when the water is provided to an irrigation system, a sprinkler system, etc. As indicated above, the amount of leakage within a water supply network can usually be detected by utility monitoring, but such monitoring has limited usefulness in identifying the location of the leak. Further, leaks occurring after a water usage endpoint are even more difficult since monitoring cannot be used to detect the amount or location of the leakage.

What is needed is a system and method configured to facilitate identification of an outdoor leak using information from a utility supply network. What is further needed is such a system and method configured to utilize flow amounts in a utility supply network in combination with additional information to identify and quantify likelihood for potential leak location probabilities.

### SUMMARY OF THE INVENTION

This present application describes a system and method for pinpointing an area of the outdoors that is the location of a leak using environmental imagery. The matter for which protection is sought is defined in the appended claims. In part, infrared environmental imagery detects heat energy which can indicate wet areas on land surfaces. The present invention further uses water usage data from a utility supply network including a map of a network of water pipes to provide the facilitate the analysis of the environmental imagery and improve the identification of the location of the leak.

The invention includes a method for combining property lot polygons data, obtained from a county or data aggregator with environmental imagery to create a property profile using machine learning. This profile will include polygons of the group of lawns, gardens, pools, and structures. This profile, when combined with infrared imagery, can be used by a different machine learning algorithm to pinpoint leaks and identify overwatering spots.

In one more detailed aspect, a computer implemented method implemented on a computer system including non-transient memory storing instructions for identifying leak locations based on environmental imagery is implemented. The method includes tracking a utility supply usage environment in environmental imagery captured over a period of time, identifying changes in the environmental imagery indicative of a leak location, applying a property profile to the utility supply usage environment to generate leak location property data, identifying one or more flow measurement devices based on the leak location and leak location property data, and generating a leak notification based on the leak location in the environmental imagery, the property profile data and meter data from the identified one or more flow measurement devices.

In an exemplary embodiment, generating leak location property data includes identifying a specific property and property polygons for the specific property. The property polygons identify and delineate the type and locations of property features for the specific property. In another, generation of the leak notification is dependent on whether a type and location of property features correlates to the identified leak location in the specific property.

In another embodiment, generation of the leak notification includes determining whether the identified changes can be correlated to the meter data from the identified one or more flow measurement devices. Determining whether the identified changes can be correlated to the meter data from the identified one or more flow measurement devices may include determining whether the leak location correlates to a conduit between an inflow measurement device and outflow measurement devices and a leak has been detected based on aggregation of the meter data from the measurement devices

In another embodiment, generation of the leak notification includes controlling a supply flow within a utility supply network. A control system can activate an automatic shutoff valve upstream from the detected leak where warranted.

In another more detailed aspect, a computer implemented leak indication system including non-transient memory storing instructions for identifying leak locations based on environmental imagery is provided. The system includes a leak detection system executed by a computer processor for tracking a utility supply usage environment in environmental imagery captured over a period of time, including identifying changes in the environmental imagery indicative of a leak location, applying a property profile to the utility supply usage environment to generate leak location property data, identifying one or more flow measurement devices based on the leak location and leak location property data, and generating a leak notification based on the leak location in the environmental imagery, the property profile data and meter data from the identified one or more flow measurement devices.

In yet another more detailed aspect, computer implemented method implemented on a computer system including non-transient memory storing instructions for identifying leak locations based on environmental imagery is implemented. The method includes tracking a utility supply usage environment in environmental imagery captured over a period of time, identifying changes in the environmental imagery indicative of a leak location, applying a property profile to the utility supply usage environment to generate leak location property data including identification of polygon data records for the leak location, identifying one or more flow measurement devices based on the leak location and leak location property data in the polygon data record, generating a leak notification based on the leak location in the environmental imagery and the polygon data record, the property profile data and meter data from the identified one or more flow measurement devices, and updating criteria used to generate the leak notification based on actual leak data.

Other aspects of the invention, besides those discussed above, will be apparent to those of ordinary skill in the art from the description of the preferred embodiments which follows. In the description, reference is made to the accompanying drawings, which form a part hereof, and which illustrate examples of the invention.

### BRIEF DESCRIPTION OF THE DRAWINGS

Fig. 1 is a utility supply environment including a water supply network and a control system configured to facilitate outdoor leak detection, according to an exemplary embodiment;
Fig. 2 is a representation of geographically overlapping data maps, used to identify and quantify likelihood for potential leak location probabilities, according to an exemplary embodiment;
Fig. 3 is a block diagram conceptually illustrating example components of the control system of Fig. 1 for detecting outdoor leaks, according to an exemplary embodiment;
Fig. 4 is a flow chart illustrating the steps implemented by the leak detection module of Fig. 3, stored in the memory, to utilize machine learning algorithms to facilitate detection of leaks within a utility supply usage environment, according to an exemplary embodiment; and
Fig. 5 is a block diagram representation of polygon data records each of which includes a leak indication value 550.

### DETAILED DESCRIPTION OF THE INVENTION

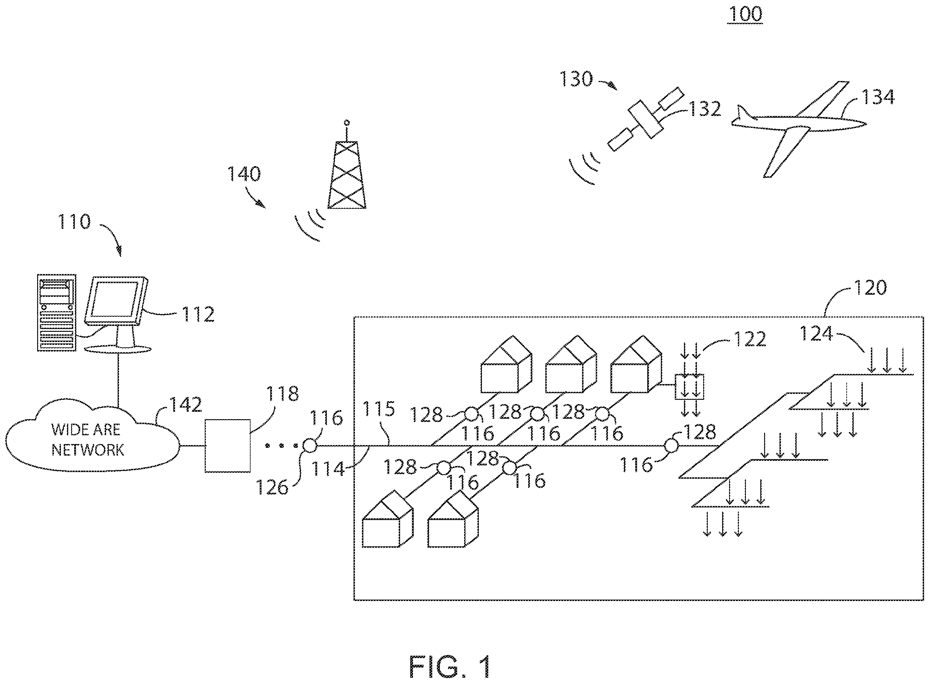

Referring first to Fig. 1, a utility supply environment 100 is shown, according to an exemplary embodiment. Utility supply environment 100 includes a utility monitoring system 110, a utility supply usage environment 120, an environment monitoring system 130, and a communication system 140. Utility monitoring system 110 is configured to facilitate outdoor leak detection based on environmental imagery of the utility supply usage environment 120 captured by environment monitoring system 130 in combination with utility usage information being generated by utility monitoring system 110. Environment 100 is shown according to an exemplary embodiment with an exemplary configuration, but one of ordinary skill in the art would understand that a variety of configurations and components may be used with an environment 100 to implement systems and methods described herein.

The utility monitoring system 110 includes a monitoring control system 112 and a utility supply network 114. Utility monitoring system 110 be implemented in a variety of different configurations. For example, system 110 can include additional systems or application such as a billing system, a utility supply monitoring system, a quality monitoring system, etc. that are not shown in this simplified environment but would be understood by one of ordinary skill in the art.

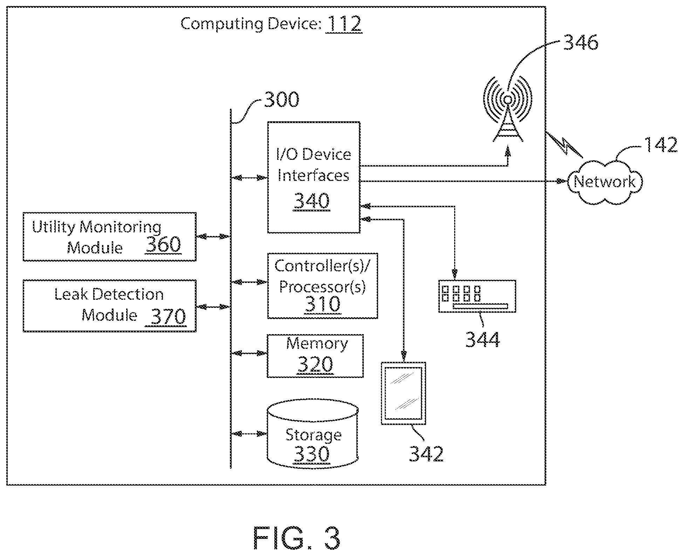

Monitoring control system 112, an example of which is described below with reference to Fig. 3, is provided for collecting flow measurement data from a network of flow measurement devices 116 in the utility supply network 114. One example of such flow measurement devices are utility meters distributed within a geographic area served by a utility are monitored by the utility. In the utility example, the control system 112 typically is connected to additional systems (not shown), such as a billing computer which requests data and imports a data file from the control system 112 to obtain meter data to produce customer statements of account for utility usage, a monitoring system for monitoring exception conditions such as contamination leakage or tampering or shut-off conditions as described in further detail below, a quality monitoring system for detecting any issues with the utility being supplied such as contamination, degradation, etc. It is also possible that, in some embodiments, the functions of these separate systems could be combined in a single system on one or more computers running multiple application programs. In this exemplary embodiment, the system is described as with reference to a water utility supply network, however, in other embodiments, the network can be for a different type of utility, such as gas or electricity or for a manufacturing or other purpose.

The control system 112 communicates with utility supply network 114 through communication system 140. In an exemplary communication system 140, control system 140 communicates over a wide area network (WAN) 142, such as the Internet, to a router and/or a receiver 118 receiving data in radio frequency (RF) signals from flow measurement devices 116, as described in further detail below. The receiver 118 may also be referred to as a "gateway" because it interfaces between a local area wireless network communicating with flow measurement devices 116 and wide area network 142.

Utility supply network 114 includes a network of flow measurement devices 116, each including a utility meter, a transducer, an RF (radio frequency) transmitter and a connection to a utility supply conduit 115. In this example, the devices 116 can be meter reading and transmitting units commercially offered under the Orion^{®} trademark or the Galaxy^{®} trademark by the assignee of the present invention. These flow measurement devices 116 transmit radio frequency (RF) signals to a receiver 118 using a local area wireless network. It should be understood that there is typically more than one receiver 118 in such a network, although only one is illustrated in FIG. 1. These devices 116 may be connected to Orion^{®} or Galaxy^{®} radio transmitters to transmit status data to the receiver 118.

Utility supply network 114 is shown in an abbreviated form in Fig. 1 for illustrative purposes. One of ordinary skill in the art would understand that network 114 may include hundreds or thousands of flow measurement devices 116 and miles of utility supply conduit 115. Further, the type, configuration, size, etc. of the network 114 will vary greatly depending on the utility supply needs. For example, a large city having a large number of residential, commercial and industrial locations with significant terrain variations will have a significantly more complex network 114 than a small residential community.

The flow measurement devices 116 transmit data-encoded RF signals over low power RF frequencies either in the non FCC-licensed ISM (Industrial-Scientific-Medical) band from 902 MHz to 928 MHz. (Orion^{®} AMR systems) or in the FCC-licensed frequencies such as 150-200 Mhz, 325 MHz, 433.92 MHz or from 450 to 470 MHz (Galaxy^{®} AMR systems). The flow measurement devices 116 transmit flow and other meter data to the RF receiver 118, which in this case is an Orion^{®} receiver, that is connected through wide area network 142, in this embodiment to the Internet. In another embodiment, the receiver 118 is a gateway receiver of the type offered under the Galaxy^{®} trademark. The control system 112 is also connected to the wide area network 142, the Internet, and can address the receivers 118 at a receiver network address which can be an Internet Protocol (IP) address of the format WWW.XXX.YYY.ZZZ-where W, X, Y and Z are values in a range from "0" to "255", such as for example: 192.168.1.175. The receiver network address can also be a uniform resource locator (URL) in the form: http://www.google.com. As used herein, the term "meter data" should be understood to include either utility consumption data or condition status data, or both. Condition status data includes leak detection data, contaminant detection data, tamper data and shut-off valve data and other types of data concerning meter operation besides actual utility consumption data.

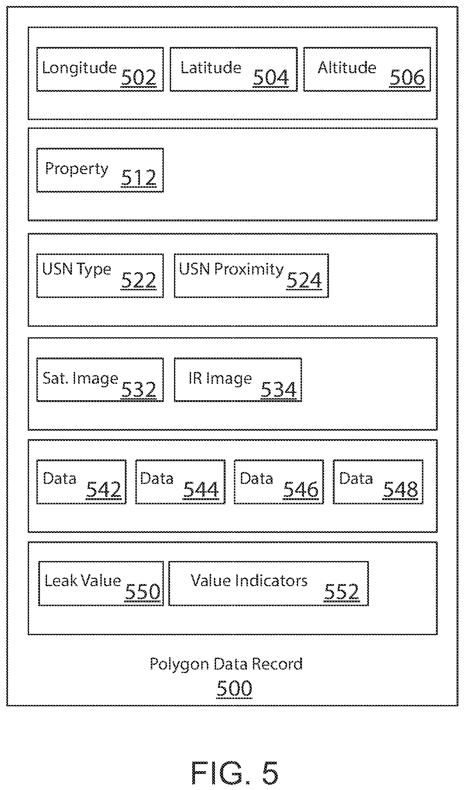

The method and system of the present invention is implemented by control system 112 with network access to wide area network 142, which may be the Internet. The method of the invention includes communication with the receiver(s) 125 using a receiver network address that has been preset in the receiver 125 and provided to the control system 112. The control system 112 operates under the control of a stored computer program including a contaminant detection and management routine, as represented by FIG. 5. The blocks in the illustrations in FIG. 5 represent one or more program instructions in the stored computer program that are executed by a processor in the control system 112. The computer program is stored in the memory in the control system 112 but can also be stored in a tangible data storage medium or in a file for transmission on the Internet.

The invention provides a method and a system for the collection of meter data from the flow measurement devices 132 of the utility supply network and for providing improved contaminant detection and management based on allocation of the flow measurement devices 132 and contaminant sensors into utility supply network 130 as described below. The method and system can be used to facilitate contaminant location within supply network 130 such that the utility can identify water outlets that have been affected, water outlets that will be affected and water outlets that will not be affected by detected contaminants. The method and system can also be used to control the utility supply network 130, identify and facilitate contact with utility customers to flush the contaminant, etc. to respond to the contamination.

Utility supply usage environment 120 is a terrestrial environment including the utility supply network 114 including the supply conduit 114 and the flow measurement devices 116. Environment 120 may be, for example, an urban, suburban, rural, etc. area wherein water from supply network is being provided to end users for use within residences, for personal irrigation, for agricultural irrigation, etc.

Utility supply usage environment 120 includes any area of land to which water is supplied through utility supply network 114. Environment 120 can include water travelling through conduit that is metered, such as conduit 115, and conduit that is unmetered, such as any outdoor conduit and/or water usage outlet downstream from a flow measurement device 116, such a sprinkler system 122 and/or an irrigation system 124. Although sprinkler system 122 and irrigation system 124 are provided as examples, it should be understood that a variety of implementations that could include outdoor conduit and/or water usage outlets are possible.

In operation, utility supply network 114 may include one or more flow measurement devices 116, positioned upstream from the conduit 115 entering utility supply usage environment 120, designated as an inflow measurement device 126. Utility supply network 114 is configured to recognize the remainder of the flow measurement devices 116 as outflow measurement devices 128. Utility monitoring system 110 may be configured the utility supply throughout the utility supply usage environment 120. Specifically, utility monitoring system 110 may monitors the utility supply network to identify usage, quality, outages, theft, leakage, contamination, etc. For example, a utility can detect utility supply loss by subtracting the utility supply added to the conduit 115 through inflow measurement device 126 minus the aggregate amount removed from the utility supply network at the outflow measurement devices 128.

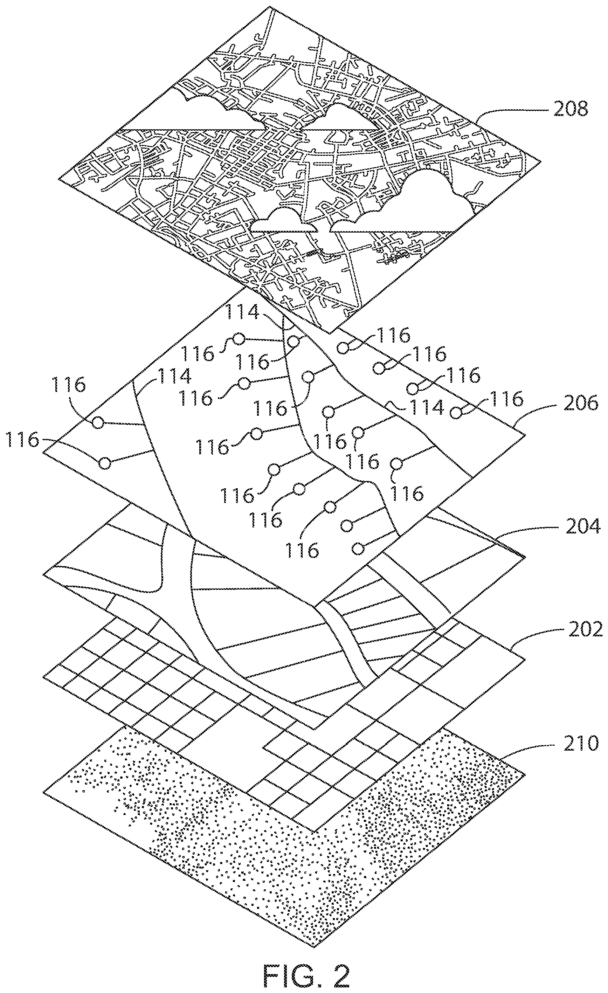

Environment monitoring system 130 includes systems and methods for capturing and conveying environmental images of utility supply usage environment 120. Environmental images may include aerial images, satellite images, etc. of the land within usage environment 120. Exemplary environmental images are shown and described below with reference to Fig. 2.

Environmental monitoring system 130 can include an imagery generating device 136 mounted on a vehicle traveling above utility supply usage environment 120, such as a satellite 132 and/or an aircraft 134. Imagery generating device 136 may be one or more data capture devices. For example, device 136 may be a sensor, a camera, etc. Where device 136 is a camera, device 136 may be a camera configured to capture an image of supply usage environment 120 and/or an infrared camera that detects heat energy, indicative of areas of high moisture within the environment 120. In a preferred embodiment, environmental monitoring system 130 is configured to periodically, such as monthly, daily, hourly, etc., capture an environmental image of the usage environment 120. The capture environmental images may be transmitted from the vehicles to monitoring control system 112 through communication system 140.

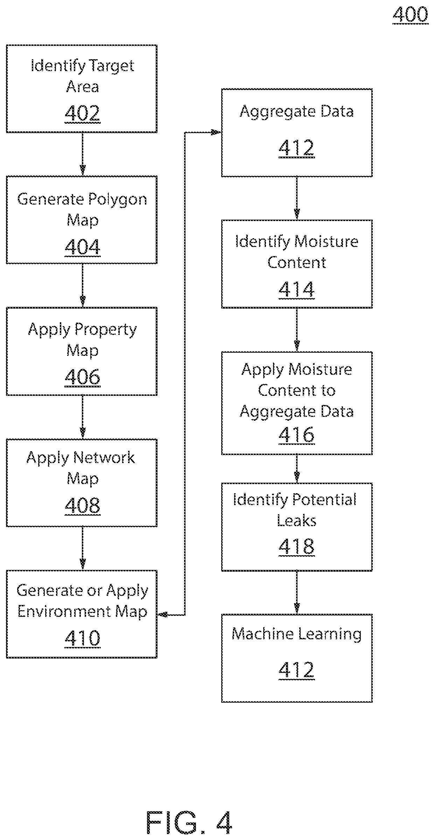

Monitoring control system 112 is configured to implement a method, further described below with reference to Fig. 4, to utilize flow amounts in a utility supply network in combination with additional information to identify and quantify likelihood for potential leak location probabilities. The additional information may be stored in systems 112, received from an external source, generated by environmental monitoring system 130, etc. The additional information may be represented by overlapping geographic based data maps. For example, referring now to Fig. 2, geographically overlapping data maps 200, used to identify and quantify likelihood for potential leak location probabilities, are shown, according to an exemplary embodiment.

In a first data polygon map 202, a target geographic area is divided into nonoverlapping one (1) meter squares. Each square is assigned a unique identifier. Each square is associated with a latitude, longitude, and altitude for a centermost point of the 1-meter square. The size and shape of the divisions used in the exemplary embodiment are customizable and can vary significantly as would be understood by one of ordinary skill in the art.

Within first data polygon map 202, monitoring control system 112 may be configured to combine homogeneous polygons. For example, where four adjacent polygons are all entirely associated with a body of water such as a lake or river, the polygons may be combined into a single larger polygon associated with a latitude, longitude, and altitude for a center most point of the larger polygon.

In a second data property map 204, the target geographic area is divided according to GIS data to define one or more property lots. Each property lot is typically defined based on property lot polygon data, obtained from a county, city or other data aggregator. Each property lot is associated with a plurality of the 1-meter squares defined in polygon map 202.

In the third data utility network map 206, the target area is shown including at least a portion of the utility supply network 114, described above with reference to Fig. 1. As the utility network map 206 is for the same target area has the property map 204 and the polygon map 202, portions of the utility supply network 114 will be correlated with particular polygons and properties. In an exemplary embodiment, each property lot is associated with a single flow measurement device 116 of the utility supply network 114. The single flow measurement device 116 may further be associated with a single 1-meter square of the plurality of the 1-meter squares defined in polygon map 202 associated with the property lot from property map 204. Additionally, both specific properties and specific 1-meter squares are associated with the conduit, junctures, etc. for the utility supply network 114 within the target area.

In a fourth data information map 208, the target area is shown including data from one or more external sources. Specifically, the target area may be shown including environmental timeseries weather data and/or real-time data including weather information, precipitation information, wind information, etc. The information map 208 may be associated with current data, historical data, historical averages data, etc.

In a fifth data environmental image map 210, the target area is shown including the environmental image generated by environmental monitoring system 130. Although described as being a single map, it should be understood that the map may include multiple layers of environmental image information. For example, image map 210 may be one or more of a satellite image and an infrared image.

Referring now to Fig. 3, a block diagram conceptually illustrating example components of the control system 112 for detecting outdoor leaks, according to an exemplary embodiment. In operation, the control system 112 may include computer-readable and computer-executable instructions that reside on the control system 112, as is discussed further below.

As illustrated in Fig. 3, the network control system 112 may include an address/data bus 300 for conveying data among components of the control system 112. Each component within the control system 112 may also be directly connected to other components in addition to (or instead of) being connected to other components across the bus 300. The control system 112 may include one or more microcontrollers/controllers/processors 310 that may each include a central processing unit (CPU) for processing data and computer-readable instructions, and a memory 320 for storing data and instructions. The memory 320 may include volatile random-access memory (RAM), non-volatile read only memory (ROM), non-volatile magnetoresistive (MRAM) and/or other types of memory. The control system 112 may also include a data storage component 330, for storing data and microcontrollers/controller/processor-executable instructions (e.g., instructions to perform one or more steps of the methods illustrated in and described herein). The data storage component 330 may include one or more non-volatile storage types such as magnetic storage, optical storage, solid-state storage, etc. The control system 112 may also be connected to removable or external non-volatile memory and/or storage (such as a removable memory card, memory key drive, networked storage, etc.) through input/output device interfaces 340.

In an exemplary embodiment, data storage component 330 may be configured to include property lot polygons data, obtained from a county or data aggregator. Alternatively, control system 112 may be configured to access such data from an external source, such as through network 142. The property lot polygons data may be data from a geographic information system (GIS) providing access to a variety of data of geographical data that is in some way referenced to locations on the earth, such as geographical data providing property lot polygons data for a utility supply usage environment 120.

Computer instructions for operating the control system 112 and its various components may be executed by the microcontroller(s)/controller(s)/processor(s) 310, using the memory 320 as temporary "working" storage at runtime. The computer instructions may be stored in a non-transitory manner in non-volatile memory 320, storage 330, or an external device. Alternatively, some or all of the executable instructions may be embedded in hardware or firmware in addition to or instead of software.

The control system 112 includes input/output device interfaces 340. A variety of components may be connected through the input/output device interfaces 340, such as a display or display 342; a keyboard 344; and other components. The display 302, keyboard 344, and other components may be integrated into the control system 112 or may be separate. The display 342 may be a display of any suitable technology, such as a liquid crystal display, an organic light emitting diode display, electronic paper, an electrochromic display, a cathode ray tube display, a pico projector or other suitable component(s).

The input/output device interfaces 340 may also include an interface for an external peripheral device connection such as universal serial bus (USB), FireWire, Thunderbolt, Ethernet port or other connection protocol that may connect to network 142. The input/output device interfaces 340 may also include a connection to antenna 346 to connect to network 142 via a wireless local area network (WLAN) (such as WiFi) radio, Bluetooth, and/or wireless network radio, such as a radio capable of communication with a wireless communication network such as a Long-Term Evolution (LTE) network, WiMAX network, 3G network, etc.

The control system 112 further includes a utility monitoring module 360 that controls the operation of the components in utility monitoring system 110. Module 360 may be one or more computer programs and/or controllers including executable instructions that may be embedded in hardware or firmware in addition to, or instead of, software.

Control system 112 is configured to utilize and/or store a supply network map that correlates the location of utility supply conduit 115 and flow measurement devices 116 with the property lot polygons data. The supply network map may be generated specifically for each utility supply usage environment 120 being monitored.

The control system 112 may further include a leak detection module 370 configured to implement a leak detection method as described herein with reference to Fig. 4. The leak detection method is configured to detect leakages with as described herein. "Algorithm" is a set of instructions to be followed in calculations or processing, especially by a computing device. In a computer implemented method or system, the term algorithm may be used interchangeably with the terms "rules" or "instructions," to refer to a sequence of steps to be carried out by a computer processor implementing instructions encoded in memory. An algorithm can be encoded in program code stored on a physical storage medium.

Leak detection module 370 may be configured to identify leaks in the utility supply usage environment 120 that may represent unaccounted for water or revenue loss. Leak detection module 370 is configured to use machine learning in analyzing the environmental imagery to identify and provide potential leak locations. The detection module 370 is further configured to utilize the property lot polygons data in combination with utility usage information, received from utility monitoring module 360, to identify for geographic leak locations of leaks detected through analysis of the environmental imagery.

Specifically, leak detection module 370 is configured to utilize the property lot polygons data, obtained from a county or data aggregator with environmental imagery to create a property profile using machine learning. This property profile will include polygons of lawns, gardens, pools, and structures. This property profile is then further augmented by the supply network map showing the location of conduit 115 and flow measurement devices 116. The property profile, when combined with environmental imagery, can be used by different machine learning algorithms to pinpoint leaks and identify overwatering spots.

In an exemplary embodiment, control system 112 may be configured to control the operation of components in the utility supply network 114. Specifically, control system 112 controls the operation of one or more systems of the utility supply network 130 to control the movement of the utility supply through the supply network 114. Accordingly, control system 112 may be configured to operate remote shut off valves, etc. to minimize the water loss from a detected leak.

Referring now to Fig. 4, a flow chart 400 illustrates the steps implemented by the leak detection module 370 stored in the memory to utilize machine learning algorithms to facilitate detection of leaks within a utility supply usage environment 120, according to an exemplary embodiment. Now referring also to Fig. 5, detection module 370 facilitates detection of leaks by generating and continuously monitoring polygon data records 500, as further described below, each of which includes a leak indication value 550. Although flow chart 400 shows numerous steps arranged in a specific order, one of ordinary skill in the art would understand that the method can be implemented using different steps, a different number of steps and/or ordering of steps to implement the illustrated functions and achieve the benefits described herein.

In the first step 402, leak detection module 370 is configured to identify a target area, such as utility supply usage environment 120 and/or data maps 200. Although environment 120 is shown herein as representing a residential street, the target area may be any of a variety of sizes, such as a neighborhood, a city, an area served by the utility supply network 114, etc. In the example product provided herein, the target area is utility supply usage environment 120.

In a step 404, leak detection module 370 is configured to generate a polygon map 202 for the target area. Polygon map 202 may be a representation of the target area divided into 1-meter squares according to the scale of the target area. For example, where the target area is about hundred acres, polygon map 202 will be formed with approximately 43,560 1-meter polygon squares. Leak detection module 370 is configured to generate a polygon data record 500 for each polygon identified for the target area. Each polygon data record 500 includes a real-world longitude field 502, a latitude field 504 and an altitude field 506 for the point at the center of the polygon. Following the initial definition, leak detection module 370 may be configured to analyze the contents of each 1-meter square relative to surrounding squares. Where adjoining squares enclose homogeneous terrain, the squares may be combined to form a larger polygon. Based on the combination, the polygon data record 500 and its associated fields will be aggregated for a new polygon data record 500 to be associated with the polygon formed from the combined squares. Additionally, leak detection module 370 may be configured to eliminate those polygons that, based on regular satellite imagery and machine learning is described below. Are not of interest in identifying potential leaks. Examples of such polygons are those that are filled with buildings, lakes, etc. where leak detection is not likely to be needed.

In a step 406, leak detection module 370 is configured to generate or apply a property map 204 for the target area. According to exemplary embodiment, property map 204 is a plat map, showing property lines and delineating parcels of land. In a typical property map 204 embodiment, each parcel is associated with a house, multifamily building, office, industrial building, etc.

In a step 408, leak detection module 370 is configured to generate or apply the utility network map 206 illustrating the geographic location of the utility supply network 114, including the location of both flow measurement devices 116 and utility network conduit 115. In a typical environment, each parcel depicted in property map 204 is associated single utility supply network end point and a unique flow measurement device 116, typically a utility meter.

In a step 410, leak detection module 370 is configured to generate or obtain the environmental image map 210 displaying the information captured by environmental monitoring system 130, related to the geography of the target area. In an exemplary embodiment, the environmental image map 210 includes both an aerial or satellite image and an infrared aerial or satellite image of the same geography as the target area. Leak detection module 370 may be configured to generate a single instance of a satellite image but be configured to receive/capture new infrared images more frequently, such as several times per day.

In a step 412, leak detection module 370 is configured to generate and/or obtain aggregate data for each polygon in map 202, as indexed by longitude, latitude and altitude across all of maps 202 through 208. Leak detection module 370 is configured to generate a polygon data record 500 containing the information for each polygon identified for the target area.

The aggregate data can further include an association with a property from property map 204. In an exemplary embodiment, in which a typical property is ¼ acre and each polygon is 1 m², approximately 1000 polygons will be associated with the property, depending on whether adjoining polygons have been merged as described below. Each polygon data record 500 includes a property identifier field 512 for the property with which it is associated.

The aggregate data can further include a utility network field indicating whether a particular polygon includes a portion of utility supply network 114. The indication may further specify whether the polygon that includes a portion of utility supply network 114 includes a network conduit 115 portion and/or a flow measurement device 116 portion. The indication may additionally specify, for polygons that do not include a portion of utility supply network 114, a distance or number of polygons between that polygon and a polygon that does include a portion of utility supply network 114. Accordingly, each polygon data record 500 includes a utility supply network portion type identifier field 522 and a utility supply network portion proximity identifier field 524 for the property with which it is associated. One of ordinary skill in the art would understand that a data record 500 may include a plurality of pairs of fields 522 and 524 if a polygon has proximity to both polygons having network conduit 115 therein and/or polygons having a flow measurement device 116 therein.

The aggregate data can further include the portion of the environmental image map 210 associated with that polygon. Portion data may include the images and further include additional information related to the images such as a terrain type displayed in the image, a infrared value, etc. Each polygon data record 500 includes at least one image field 532 for the property with which it is associated. In the exemplary embodiment shown in Fig. 5, data record 500 includes a satellite image in a first image field 532 and an infrared image in a second image field 532.

The aggregate data can further include information from external sources specific to the polygon. For example, external surfaces made reference to indicate the terrain type, the current weather, historical weather, user entered information such as crop type, land usage type, landscaping feature type, etc. Accordingly, each polygon data record 500 includes data from or is linked to one or more externally generated databases. In the exemplary embodiment shown in Fig. 5, data record 500 includes a weather data repository 542, a rainfall data depository 544, a windspeed data repository 546 illustrating the types of data repositories that may be provided. Leak detection module 370 may further be configured to generate a moisture index data repository 548 storing a current value and a historical record of a calculated moisture index based on the aggregate data.

In step 414, leak detection module 370 is configured to identify polygons having deviant moisture content indicated by the environmental image map, specifically an infrared image. Deviant moisture content may be indicated based on a comparison of unexpected moisture content, based on the information in the polygon data record, and the actual moisture content as indicated by the infrared image. Deviant moisture content may further be indicated by a change in moisture content over time (between two or more for damages taken at different successive times) that is not explained by weather data in the data record, changes in the moisture content of adjoining polygons, etc.

In a step 416, leak detection module 370 is configured to correlate data from flow measurement devices 116 with the data indicating deviant moisture content. The data to be correlated maybe based on hourly or more frequent water meter flow data reported by the flow measurement devices 116. Leak detection module 370 may be configured to associate particular polygons with flow measurement devices based on their proximity to the flow measurement devices 116.

In step 418, leak detection module 370 is configured to identify potential leaks in the polygons within the target area. The potential leaks are identified for all polygons having the leak indication value 550 above a predefined threshold. In other words, a correlation of water meter flow data with increased outdoor surface area moisture content enables leak detection module 372 increased the leak indication value 550 with a high degree of confidence based on the recorded continuous flow and the surface area leak detection. For example, wherein the data from a flow measurement device 116 indicates that a flow is occurring and polygons surrounding the polygon including the flow measurement device 116 have data records indicating vegetation, a uniform change in moisture content in several adjoining polygons, etc., leak detection module 370 may be configured to decrease the leak indication value 550 based on the assumption that the flow measurement device 116 is supply water for irrigation use. Polygon data record 550 may further include a value aggregator record 552 identifying those values increasing and/or decreasing the leak indication value 550. However, in the same scenario, if one particular polygon in the several adjoining polygons as infrared image data indicating a moisture content that is higher than the remaining adjoining polygons, leak detection module 370 may be configured to increase for that polygon based on the assumption that a leak has occurred within the irrigation system. In another example, leak detection module 370 may identify polygon having a deviant moisture content where a flow measurement device 116 that is upstream of the target area indicates a measurable flow, while no flow measurement device 116 within the target area indicates a measurable flow, indicative of a leak in the conduit 115 in or near the identified polygon having a deviant moisture content. Reviewing periodic imagery facilitates the determination whether the overwatering is potentially due to a leak. The accuracy of pinpointing the location of the leak is increased when this information is combined with automated hourly meter readings.

In step 420, leak detection module 370 is configured to utilize a machine learning method following the identification of polygons with potential leaks to modify one or more criteria prompting changes in the leak indication index. Machine learning algorithms can be utilized to improve the algorithms constructed to automatically review daily infrared imagery and spot areas that are been over watered.

Machine learning requires label data, as described above with reference to the records 500 and an extensive training set. Extensive training set can be manually in management manually verified, such that only a small amount of the label data needs to be reviewed. For example, for residential applications, leak detection module 370 may utilize data in a mobile phone application interacting with a property owner to prompt the user for the classification each time leak has been detected and stopped. Machine learning may be both systemwide, such as by correcting algorithms that have either improperly increased or decreased leak indication values in an inappropriate manner. Machine learning may also be specific to polygons, data maps, data types, etc. such as by correcting the impact that windspeed has on calculating a deviant moisture content for a polygon. Machine learning may include reviewing the value aggregators 552 contributing falsely and/or accurately to actual leak data relative to a leak indication value 550 that is above or below a threshold.

The present invention may be implemented in hardware and/or in software. Many components of the system, for example, network interfaces etc., have not been shown, so as not to obscure the present invention. However, one of ordinary skill in the art would appreciate that the system necessarily includes these components. A computing device is a hardware that includes at least one processor coupled to a memory. The processor may represent one or more processors (e.g., microprocessors), and the memory may represent random access memory (RAM) devices comprising a main storage of the hardware, as well as any supplemental levels of memory, e.g., cache memories, non-volatile or back-up memories (e.g., programmable or flash memories), read-only memories, etc. In addition, the memory may be considered to include memory storage physically located elsewhere in the hardware, e.g. any cache memory in the processor, as well as any storage capacity used as a virtual memory, e.g., as stored on a mass storage device.

The hardware of a computing device also typically receives a number of inputs and outputs for communicating information externally. For interface with a user, the hardware may include one or more user input devices (e.g., a keyboard, a mouse, a scanner, a microphone, a web camera, etc.) and a display (e.g., a Liquid Crystal Display (LCD) panel). For additional storage, the hardware my also include one or more mass storage devices, e.g., a floppy or other removable disk drive, a hard disk drive, a Direct Access Storage Device (DASD), an optical drive (e.g., a Compact Disk (CD) drive, a Digital Versatile Disk (DVD) drive, etc.) and/or a tape drive, among others. Furthermore, the hardware may include an interface to one or more networks (e.g., a local area network (LAN), a wide area network (WAN), a wireless network, and/or the Internet among others) to permit the communication of information with other computers coupled to the networks. It should be appreciated that the hardware typically includes suitable analog and/or digital interfaces to communicate with each other.

This has been a description of the preferred embodiments, but it will be apparent to those of ordinary skill in the art that variations may be made in the details of these specific embodiments without departing from the scope of the present invention. The matter for which protection is sought is defined by the appended claims.

## Claims

1. A computer implemented method implemented on a computer system (110) including non-transient memory (320) storing instructions for identifying leak locations based on environmental imagery, comprising:
tracking a utility supply usage environment (120) in environmental imagery captured over a period of time;
identifying changes in the environmental imagery indicative of a leak location;
obtaining property lot polygons data from a county or data aggregator;
combining the property lot polygons data with environmental imagery to create a property profile using machine learning, wherein the property profile includes polygons of the group of lawns, gardens, pools, and structures;
augmenting the property profile by a supply network map that correlates the location of utility supply conduits and flow measurement devices with the property lot polygons data;
applying the property profile to the utility supply usage environment (120) to generate leak location property data;
identifying one or more flow measurement devices (116) based on the leak location and the leak location property data; and
generating a leak notification based on the leak location in the environmental imagery, the leak location property data and meter data from the identified one or more flow measurement devices (116).

2. The method of claim 1, wherein generating leak location property data includes identifying a specific property and property polygons for the specific property, wherein preferably the property polygons identify and delineate the type and locations of property features for the specific property.

3. The method of claim 2, wherein generation of the leak notification is dependent on whether a type and location of property features correlates to the identified leak location in the specific property, wherein preferably the type and location of property features includes soil type and evapotranspiration values for each property polygon.

4. The method of claim 1, wherein generation of the leak notification includes determining whether the identified changes can be correlated to the meter data from the identified one or more flow measurement devices (116).

5. The method of claim 4, wherein determining whether the identified changes can be correlated to the meter data from the identified one or more flow measurement devices (116) includes determining whether the leak location correlates to a conduit (115) between an inflow measurement device (126) and outflow measurement devices (128) and a leak has been detected based on aggregation of the meter data from the measurement devices (116).

6. The method of claim 1, wherein generation of the leak notification includes controlling a supply flow within a utility supply network (114).

7. A computer implemented leak indication system (110) including non-transient memory (320) storing instructions for identifying leak locations based on environmental imagery, comprising:
a leak detection system (110) executed by a computer processor for tracking a utility supply usage environment (120) in environmental imagery captured over a period of time, including
identifying changes in the environmental imagery indicative of a leak location,
obtaining property lot polygons data from a county or data aggregator;
combining the property lot polygons data with environmental imagery to create a property profile using machine learning, wherein the property profile includes polygons of the group of lawns, gardens, pools, and structures;
augmenting the property profile by a supply network map that correlates the location of utility supply conduits and flow measurement devices with the property lot polygons data;
applying the property profile to the utility supply usage environment (120) to generate leak location property data,
identifying one or more flow measurement devices (116) based on the leak location and the leak location property data, and
generating a leak notification based on the leak location in the environmental imagery, the leak location property data and meter data from the identified one or more flow measurement devices (116).

8. The system of claim 7, wherein generating leak location property data includes identifying a specific property and property polygons for the specific property, wherein preferably the property polygons identify and delineate the type and locations of property features for the specific property.

9. The system of claim 8, wherein generation of the leak notification is dependent on whether a type and location of property features correlates to the identified leak location in the specific property, wherein preferably the type and location of property features includes soil type and evapotranspiration values for each property polygon.

10. The system of claim 7, wherein generation of the leak notification includes determining whether the identified changes can be correlated to the meter data from the identified one or more flow measurement devices (116).

11. The system of claim 10, wherein determining whether the identified changes can be correlated to the meter data from the identified one or more flow measurement devices (116) includes determining whether the leak location correlates to a conduit (115) between an inflow measurement device (126) and outflow measurement devices (128) and a leak has been detected based on aggregation of the meter data from the measurement devices (116, 126, 128).

12. The system of claim 7, wherein generation of the leak notification includes controlling a supply flow within a utility supply network (114) through communication with a utility supply control computer system (110).

13. A computer implemented method according to one of the claims 1 to 6 implemented on a computer system (110) including non-transient memory (320) storing instructions for identifying leak locations based on environmental imagery,
wherein applying the property profile to the utility supply usage environment (120) to generate leak location property data includes identification of polygon data records for the leak location;
the method further comprising the following steps:
identifying one or more flow measurement devices (116) based on the leak location and the leak location property data in the polygon data record;
generating a leak notification based on the leak location in the environmental imagery and the polygon data record, the property profile data and meter data from the identified one or more flow measurement devices (116); and
updating criteria used to generate the leak notification based on actual leak data.

14. The method of claim 13, wherein generating leak location property data includes identifying a specific property and property polygons for the specific property, each property polygon having a unique polygon data record, wherein preferably generation of the leak notification is dependent on soil type and evapotranspiration values for each property polygon.

15. The method of claim 13, wherein generation of the leak notification includes determining whether the identified changes can be correlated to the meter data from the identified one or more flow measurement devices (116).

## Patentansprüche

1. Ein computerimplementiertes Verfahren, das auf einem Computersystem (110) implementiert ist, das einen nichtflüchtigen Speicher (320) umfasst, in dem Befehle zum Identifizieren von Leckageorten auf der Grundlage von Umgebungsbildern gespeichert sind, mit den folgenden Schritten:
Verfolgen einer Versorgungsnutzungsumgebung (120) in Umgebungsbildern, die über einen Zeitraum hinweg erfasst wurden;
Identifizieren von Änderungen in den Umgebungsbildern, die auf einen Leckageort hinweisen;
Erfassen von Grundstückspolygondaten von einem Landkreis oder einem Datenaggregator;
Kombinieren der Grundstückspolygondaten mit Umgebungsbildern, um mithilfe von maschinellem Lernen ein Grundstücksprofil zu erstellen, wobei das Grundstücksprofil Polygone der Gruppe von Rasenflächen, Gärten, Pools und Strukturen umfasst;
Ergänzen des Grundstücksprofils durch eine Versorgungsnetzkarte, die die Lage von Versorgungsleitungen und Durchflussmessgeräten mit den Grundstückspolygondaten korreliert;
Anwenden des Grundstücksprofils auf die Versorgungsnutzungsumgebung (120), um Grundstücksdaten zur Leckageposition zu generieren;
Identifizieren eines oder mehrerer Durchflussmessvorrichtungen (116) auf der Grundlage der Leckageposition und der Grundstücksdaten zur Leckageposition; und
Generieren einer Leckagemeldung auf der Grundlage der Leckageposition in den Umgebungsbildern, der Grundstücksdaten zur Leckageposition und der Zählerdaten aus dem identifizierten einen oder den identifizierten mehreren Durchflussmessvorrichtungen (116).

2. Verfahren nach Anspruch 1, wobei das Erzeugen von Daten zu den Eigenschaften des Leckageorts das Identifizieren eines bestimmten Grundstück und von Grundstückspolygonen für das bestimmte Grundstück umfasst, wobei die Grundstückspolygone vorzugsweise die Art und die Standorte von Grundstücksmerkmalen für das bestimmte Grundstück identifizieren und abgrenzen.

3. Verfahren nach Anspruch 2, wobei die Erzeugung der Leckagemeldung davon abhängt, ob eine Art und ein Ort von Grundstücksmerkmalen mit dem identifizierten Leckageort auf dem spezifischen Grundstück korrelieren, wobei vorzugsweise die Art und der Ort von Grundstücksmerkmalen die Bodenart und Verdunstungswerte für jedes Grundstückspolygon umfassen.

4. Verfahren nach Anspruch 1, wobei die Erzeugung der Leckagemeldung das Bestimmen umfasst, ob die identifizierten Änderungen mit den Zählerdaten von dem identifizierten einen oder mehreren Durchflussmessvorrichtungen (116) korreliert werden können.

5. Verfahren nach Anspruch 4, wobei das Bestimmen, ob die identifizierten Änderungen mit den Messdaten aus dem identifizierten einen oder den identifizierten mehreren Durchflussmessvorrichtungen (116) korreliert werden können, das Bestimmen umfasst, ob der Leckageort mit einer Leitung (115) zwischen einer Zuflussmessvorrichtung (126) und Abflussmessvorrichtungen (128) korreliert und eine Leckage auf der Grundlage der Aggregation der Messdaten aus den Messgeräten (116) erkannt wurde.

6. Verfahren nach Anspruch 1, wobei das Erzeugen der Leckagemeldung das Steuern eines Versorgungsflusses innerhalb eines Versorgungsnetzes (114) umfasst.

7. Ein computerimplementiertes Leckageanzeigesystem (110) mit einem nichtflüchtigen Speicher (320), der Anweisungen zum Identifizieren von Leckageorten auf der Grundlage von Umgebungsbildern speichert, umfassend:
ein Leckageerkennungssystem (110), das von einem Computerprozessor ausgeführt wird, um eine Versorgungsnutzungsumgebung (120) in Umweltbildern zu verfolgen, die über einen bestimmten Zeitraum aufgenommen wurden, einschließlich
der Identifizierung von Änderungen in den Umweltbildern, die auf einen Leckageort hinweisen,
der Beschaffung von Grundstückspolygondaten von einem Landkreis oder einem Datenaggregator;
Kombinieren der Grundstückspolygondaten mit Umgebungsbildern, um mithilfe von maschinellem Lernen ein Grundstücksprofil zu erstellen, wobei das Grundstücksprofil Polygone der Gruppe von Rasenflächen, Gärten, Pools und Strukturen umfasst;
Erweitern des Grundstücksprofils durch eine Versorgungsnetzkarte, die die Lage von Versorgungsleitungen und Durchflussmessgeräten mit den Grundstückspolygondaten korreliert;
Anwenden des Grundstücksprofils auf die Versorgungsnutzungsumgebung (120), um Grundstücksdaten zur Leckageposition zu generieren;
Identifizieren einer oder mehrerer Durchflussmessvorrichtungen (116) auf der Grundlage der Leckageposition und der Grundstücksdaten zur Leckageposition; und
Generieren einer Leckagemeldung auf der Grundlage der Leckageposition in den Umgebungsbildern, der Grundstücksdaten zur Leckageposition und der Zählerdaten aus dem identifizierten einen oder den identifizierten mehreren Durchflussmessvorrichtungen (116).

8. Das System nach Anspruch 7, wobei das Erzeugen von Leckageort-Eigenschaftsdaten das Identifizieren eines bestimmten Grundstücks und von Grundstückspolygonen für das bestimmte Grundstück umfasst, wobei die Grundstückspolygone vorzugsweise den Typ und die Standorte von Grundstücksmerkmalen für das bestimmte Grundstück identifizieren und abgrenzen.

9. Das System nach Anspruch 8, wobei die Erzeugung der Leckagemeldung davon abhängt, ob eine Art und ein Ort von Grundstücksmerkmalen mit dem identifizierten Leckageort auf dem spezifischen Grundstück korrelieren, wobei vorzugsweise die Art und der Ort von Grundstücksmerkmalen die Bodenart und die Verdunstungswerte für jedes Grundstückspolygon umfassen.

10. Das System nach Anspruch 7, wobei die Erzeugung der Leckagemeldung das Bestimmen umfasst, ob die identifizierten Änderungen mit den Zählerdaten aus dem identifizierten einen oder mehreren Durchflussmessgeräten (116) korreliert werden können.

11. Das System nach Anspruch 10, wobei das Bestimmen, ob die identifizierten Änderungen mit den Messdaten aus dem identifizierten einen oder den mehreren Durchflussmessgeräten (116) korreliert werden können, das Bestimmen umfasst, ob der Leckageort mit einer Leitung (115) zwischen einem Zuflussmessgerät (126) und Abflussmessgeräten (128) korreliert und eine Leckage auf der Grundlage der Aggregation der Messdaten aus den Messgeräten (116, 126, 128) erkannt wurde.

12. Das System nach Anspruch 7, wobei das Erzeugen der Leckagemeldung das Steuern eines Versorgungsflusses innerhalb eines Versorgungsnetzes (114) durch Kommunikation mit einem Versorgungssteuerungscomputersystem (110) umfasst.

13. Ein computerimplementiertes Verfahren gemäß einem der Ansprüche 1 bis 6, das auf einem Computersystem (110) implementiert ist, das einen nichtflüchtigen Speicher (320) umfasst, in dem Anweisungen zum Identifizieren von Leckageorten auf der Grundlage von Umgebungsbildern gespeichert sind,
wobei
das Anwenden des Eigenschaftsprofils auf die Versorgungsnutzungsumgebung (120) zum Erzeugen von Leckageort-Eigenschaftsdaten das Identifizieren von Polygondatensätzen für den Leckageort umfasst;
wobei das Verfahren ferner die folgenden Schritte umfasst:
Identifizieren einer oder mehrerer Durchflussmessvorrichtungen (116) auf der Grundlage des Leckageortes und der Leckageort-Eigenschaftsdaten in dem Polygondatensatz;
Erzeugen einer Leckagemeldung auf der Grundlage des Leckageortes in den Umgebungsbildern und des Polygondatensatzes, der Eigenschaftsprofildaten und der Zählerdaten von der identifizierten einen oder mehreren Durchflussmessvorrichtungen (116); und
Aktualisieren der Kriterien, die zum Erzeugen der Leckagemeldung verwendet werden, auf der Grundlage der tatsächlichen Leckagedaten.

14. Verfahren nach Anspruch 13, wobei das Erzeugen von Leckageortseigenschaftsdaten das Identifizieren einer bestimmten Eigenschaft und von Eigenschaftspolygonen für die bestimmte Eigenschaft umfasst, wobei jedes Eigenschaftspolygon einen eindeutigen Polygondatensatz aufweist, wobei das Erzeugen der Leckagemeldung vorzugsweise von der Bodenart und den Verdunstungswerten für jedes Eigenschaftspolygon abhängt.

15. Verfahren nach Anspruch 13, wobei das Erzeugen der Leckagemeldung das Bestimmen umfasst, ob die identifizierten Änderungen mit den Messdaten aus dem identifizierten einen oder den identifizierten mehreren Durchflussmessvorrichtungen (116) korreliert werden können.

## Revendications

1. Procédé mis en œuvre sur un système informatique (110) comprenant une mémoire non volatile (320) stockant des instructions pour identifier des emplacements de fuites à partir d'images environnementales, comprenant :
le suivi d'un environnement d'utilisation des services publics (120) dans des images environnementales capturées sur une période donnée ;
l'identification des changements dans les images environnementales indiquant un emplacement de fuite ;
l'obtention de données sur les polygones des propriétés auprès d'un comté ou d'un agrégateur de données ;
la combinaison des données sur les polygones des propriétés avec les images environnementales afin de créer un profil propriété à l'aide de l'apprentissage automatique, le profil propriété comprenant des polygones du groupe des pelouses, jardins, piscines et structures ;
l'enrichissement du profil propriété par une carte du réseau d'approvisionnement qui met en corrélation l'emplacement des conduites d'approvisionnement en services publics et des dispositifs de mesure du débit avec les données sur les polygones des propriétés;
appliquer le profil de propriété à l'environnement d'utilisation de l'approvisionnement en services publics (120) afin de générer des données de propriété relatives à l'emplacement de la fuite ;
identifier un ou plusieurs dispositifs de mesure de débit (116) en fonction de l'emplacement de la fuite et des données de propriété relatives à l'emplacement de la fuite ; et
générer une notification de fuite en fonction de l'emplacement de la fuite dans l'imagerie environnementale, des données de propriété relatives à l'emplacement de la fuite et des données de compteur provenant du ou des dispositifs de mesure de débit (116) identifiés.

2. Procédé selon la revendication 1, dans lequel la génération de données de l'emplacement de fuite comprend l'identification d'une propriété spécifique et de polygones de propriété pour la propriété spécifique, dans lequel, de préférence, les polygones de propriété identifient et délimitent le type et les emplacements des caractéristiques de la propriété pour la propriété spécifique.

3. Procédé selon la revendication 2, dans lequel la génération de la notification de fuite dépend du fait que le type et l'emplacement des caractéristiques de la propriété correspondent ou non à l'emplacement de la fuite identifié dans la propriété spécifique, dans lequel, de préférence, le type et l'emplacement des caractéristiques de la propriété comprennent le type de sol et les valeurs d'évapotranspiration pour chaque polygone de propriété.

4. Procédé selon la revendication 1, dans lequel la génération de la notification de fuite comprend la détermination du fait que les changements identifiés peuvent être corrélés aux données de compteur provenant d'un ou plusieurs dispositifs de mesure de débit (116) identifiés.

5. Procédé selon la revendication 4, dans lequel la détermination de la corrélation entre les changements identifiés et les données de comptage provenant d'un ou plusieurs dispositifs de mesure de débit (116) identifiés comprend la détermination de la corrélation entre l'emplacement de la fuite et un conduit (115) entre un dispositif de mesure d'entrée (126) et des dispositifs de mesure de sortie (128) et la détection d'une fuite sur la base de l'agrégation des données de comptage provenant des dispositifs de mesure de débit (116).

6. Procédé selon la revendication 1, dans lequel la génération de la notification de fuite comprend le contrôle d'un débit d'alimentation dans un réseau d'alimentation en services publics (114).

7. Système d'indication de fuite (110) mis en œuvre par ordinateur, comprenant une mémoire non volatile (320) stockant des instructions pour identifier les emplacements de fuite sur la base d'images environnementales, comprenant :
un système de détection de fuite (110) exécuté par un processeur informatique pour suivre un environnement d'utilisation d'approvisionnement en services publics (120) dans des images environnementales capturées sur une période de temps, comprenant
l'identification des changements dans les images environnementales indiquant un emplacement de fuite,
l'obtention de données polygonales des propriétés auprès d'un comté ou d'un agrégateur de données ;
la combinaison des données de polygones de propriétés avec des images environnementales pour créer un profil propriété à l'aide de l'apprentissage automatique, dans lequel le profil propriété comprend des polygones du groupe de pelouses, jardins, piscines et structures ;
l'augmentation du profil propriété par une carte du réseau d'approvisionnement qui corrèle l'emplacement des conduites d'approvisionnement en services publics et des dispositifs de mesure du débit avec les données de polygones de propriétés;
appliquer le profil de propriété à l'environnement d'utilisation de l'approvisionnement en services publics (120) afin de générer des données de propriété relatives à l'emplacement de la fuite,
identifier un ou plusieurs dispositifs de mesure du débit (116) en fonction de l'emplacement de la fuite et des données de propriété relatives à l'emplacement de la fuite, et
générer une notification de fuite en fonction de l'emplacement de la fuite dans l'imagerie environnementale, des données de propriété relatives à l'emplacement de la fuite et des données de compteur provenant du ou des dispositifs de mesure du débit (116) identifiés.

8. Système selon la revendication 7, dans lequel la génération des données de l'emplacement de la fuite comprend l'identification d'une propriété spécifique et des polygones de propriété pour la propriété spécifique, dans lequel, de préférence, les polygones de propriété identifient et délimitent le type et les emplacements des caractéristiques de la propriété pour la propriété spécifique.

9. Système selon la revendication 8, dans lequel la génération de la notification de fuite dépend du fait que le type et l'emplacement des caractéristiques de la propriété correspondent ou non à l'emplacement de la fuite identifié dans la propriété spécifique, dans lequel, de préférence, le type et l'emplacement des caractéristiques de la propriété comprennent le type de sol et les valeurs d'évapotranspiration pour chaque polygone de propriété.

10. Système selon la revendication 7, dans lequel la génération de la notification de fuite comprend la détermination du fait que les changements identifiés peuvent être corrélés aux données de compteur provenant d'un ou plusieurs dispositifs de mesure de débit (116) identifiés.

11. Système selon la revendication 10, dans lequel la détermination de la corrélation entre les changements identifiés et les données de comptage provenant d'un ou plusieurs dispositifs de mesure de débit (116) identifiés comprend la détermination de la corrélation entre l'emplacement de la fuite et un conduit (115) entre un dispositif de mesure d'entrée (126) et des dispositifs de mesure de sortie (128) et la détection d'une fuite sur la base de l'agrégation des données de comptage provenant des dispositifs de mesure de débit (116, 126, 128).

12. Système selon la revendication 7, dans lequel la génération de la notification de fuite comprend le contrôle d'un débit d'alimentation dans un réseau d'alimentation en services publics (114) par communication avec un système informatique de contrôle d'alimentation en services publics (110).

13. Procédé mis en œuvre par ordinateur selon l'une des revendications 1 à 6, mis en œuvre sur un système informatique (110) comprenant une mémoire non volatile (320) stockant des instructions pour identifier les emplacements de fuite sur la base d'images environnementales,
dans lequel
l'application du profil de propriété à l'environnement d'utilisation de l'approvisionnement en services publics (120) pour générer des données de propriété d'emplacement de fuite comprend l'identification d'enregistrements de données polygonales pour l'emplacement de fuite ;
le procédé comprenant en outre les étapes suivantes :
identifier un ou plusieurs dispositifs de mesure de débit (116) sur la base de l'emplacement de la fuite et des données de propriété de l'emplacement de la fuite dans l'enregistrement de données polygonales ;
générer une notification de fuite sur la base de l'emplacement de la fuite dans l'imagerie environnementale et l'enregistrement de données polygonales, les données de profil de propriété et les données de compteur provenant du ou des dispositifs de mesure de débit (116) identifiés ; et
mettre à jour les critères utilisés pour générer la notification de fuite sur la base des données de fuite réelles.

14. Procédé selon la revendication 13, dans lequel la génération des données de propriété de l'emplacement de la fuite comprend l'identification d'une propriété spécifique et de polygones de propriété pour la propriété spécifique, chaque polygone de propriété ayant un enregistrement de données polygonales unique, dans lequel, de préférence, la génération de la notification de fuite dépend du type de sol et des valeurs d'évapotranspiration pour chaque polygone de propriété.

15. Procédé selon la revendication 13, dans lequel la génération de la notification de fuite comprend la détermination si les changements identifiés peuvent être corrélés aux données de compteur provenant d'un ou plusieurs dispositifs de mesure de débit (116) identifiés.
